(19) **Europäisches Patentamt**

**European Patent Office**

**Office européen des brevets**

(11) **EP 1 379 940 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(21) Anmeldenummer: **02735031.3**

(22) Anmeldetag: **05.04.2002**

(51) Int Cl.:
***G06F 7/58*** (2006.01)

(86) Internationale Anmeldenummer:
**PCT/DE2002/001257**

(87) Internationale Veröffentlichungsnummer:
**WO 2002/082256 (17.10.2002 Gazette 2002/42)**

(54) **ZUFALLSZAHLENGENERATOR UND VERFAHREN ZUM ERZEUGEN EINER ZUFALLSZAHL**

RANDOM NUMBER GENERATOR AND METHOD FOR GENERATING A RANDOM NUMBER

GENERATEUR DE NOMBRES ALEATOIRES ET PROCEDE POUR GENERER UN NOMBRE ALEATOIRE

(84) Benannte Vertragsstaaten:
**AT DE FR GB IT**

(30) Priorität: **06.04.2001 DE 10117362**

(43) Veröffentlichungstag der Anmeldung:
**14.01.2004 Patentblatt 2004/03**

(73) Patentinhaber: **Infineon Technologies AG 81669 München (DE)**

(72) Erfinder: **BREDERLOW, Ralf 81737 München (DE)**

(74) Vertreter: **Viering, Jentschura & Partner Postfach 22 14 43 80504 München (DE)**

(56) Entgegenhaltungen:
**EP-A- 0 981 081         US-A- 4 176 399
US-A- 5 706 218**

- **HÖRNEL N.: 'Physikalische Ursachen und Wirkung von Rauschquellen in Sperrschicht-Feldeffekttransistoren' DISSERTATION AN DER FAKULTCT FÜR PHYSIK DER LUDWIG-MAXIMILIANS-UNIVERSITCT MÜNCHEN 25 Oktober 2001, Seiten 1 - 159**

**Beschreibung**

Die Erfindung betrifft einen Zufallszahlengenerator und ein Verfahren zum Erzeugen einer Zufallszahl.

Ein solcher Zufallszahlengenerator und ein solches Verfahren zum Erzeugen einer Zufallszahl sind aus [1] bekannt.

Bei dem in [1] beschriebenen Zufallszahlengenerator wird das thermische Rauschen und das $\frac{1}{f}$-Rauschen eines elektronischen

Bauelements als statistische Referenz zum Erzeugen einer Zufallszahl verwendet.

Weiterhin ist in [2] beschrieben, als statistische Referenz für das Erzeugen einer Zufallszahl die Korrelation zweier mit Phasenrauschen behafteter Oszillatoren zu verwenden.

Beide auf oben beschriebene Weise erzeugten Signale sind statistisch gaussverteilt und relativ klein.

Damit ergibt sich bei diesen bekannten Realisierungsmöglichkeiten für eine statistische Referenz zum Erzeugen einer Zufallszahl das Problem, die Gaussverteilung der kleinen Signale in eine Gleichverteilung der resultierenden Zufallsbits umzuwandeln, um eine möglichst verlässliche und geeignete Erzeugung von Zufallszahlen zu gewährleisten.

Hierzu müssen zur Umwandlung der Rauschgröße in eine Zufallszahl ein oder mehrere Oszillatoren verwendet werden.

Um weiterhin ein gaussverteiltes Signal in eine gleichverteilte Folge von Zufallszahlen umzuwandeln ist ein erheblicher zusätzlicher schaltungstechnischer oder systemtechnischer Aufwand erforderlich.

Weiterhin ist es bekannt, dass bei einem Halbleiterbauelement in dessen Kristallstruktur insbesondere bei einem Halbleiterbauelement, welches mit den mit modernen Prozesstechniken möglichen minimalen Bauelementgrößen hergestellt ist, sich wenige elektrisch aktive Störstellen befinden.

Insbesondere befinden sich nur sehr wenige elektrisch aktive Störstellen in einem kleinen CMOS-Feldeffekttransistor. Diese elektrisch aktiven Störstellen haben jedoch einen relativ großen Einfluss auf den durch den Transistor fließenden elektrischen Strom.

Jede elektrisch aktive Störstelle weist zwei unterschiedliche Störstellenzustände auf, die von der jeweiligen elektrisch aktiven Störstelle zu unterschiedlichen Zeitpunkten jeweils angenommen werden können.

Die Veränderung der Störstellenzustände wird im Weiteren auch als Änderung der Belegung oder Besetzung der Störstelle mit Ladungsträgern bezeichnet.

Die Besetzung der Störstellen bzw. die Veränderung der Besetzung der Störstellen führt zu einem zeitlichen Signalverlauf in dem Halbleiterbauelement, anders ausgedrückt zu einem zeitlichen Rauschverhalten des Halbleiterbauelements. Das erzeugte Signal wird auch als Random Telegraph Signal (RTS) bezeichnet.

In [7] werden die physikalischen Rauschquellen, u.a. RTS-Rauschen eines Sperrschicht-Feldeffekttransistors beschrieben.

Ferner ist in [3] und [6] ein analoger Rauschgenerator beschrieben, bei dem unter Verwendung eines in einer Diode auftretenden Schrotrauschens eine Zufallszahl erzeugt wird.

[4] beschreibt einen Zufallszahlengenerator, der ein elektrisches Rauschsignal in eine Zufallszahl umwandelt abhängig von den Fluktuationen des Rauschsignals.

In [5] ist ein anderer digitaler Rauschgenerator beschrieben.

Somit liegt der Erfindung das Problem zu Grunde, einen Zufallszahlengenerator sowie ein Verfahren zum Erzeugen einer Zufallszahl anzugeben, bei dem die Aufbereitung von Signalen zu einer gleichverteilten zufälligen Bitfolge vereinfacht wird oder bei dem eine Linearisierung der Signale zu der gleichverteilten zufälligen Bitfolge gar nicht erforderlich ist.

Das Problem wird durch den Zufallszahlengenerator sowie durch das Verfahren zum Erzeugen einer Zufallszahl mit den Merkmalen gemäß den unabhängigen Patentansprüchen gelöst.

Ein Zufallszahlengenerator weist ein Halbleiterbauelement auf mit mindestens einer elektrisch aktiven Störstelle in dessen Kristallstruktur. Mit dem Halbleiterbauelement ist eine Besetzungs-Erfassungseinheit gekoppelt. Die Besetzungs-Erfassungseinheit ist derart eingerichtet, dass eine Besetzung oder eine Änderung der Besetzung in der elektrisch aktiven Störstelle ermittelt werden kann. Ferner ist eine Zufallszahlen-Umsetzungseinheit vorgesehen, die mit der Besetzungs-Erfassungseinheit gekoppelt ist. Die Zufallszahlen-Umsetzungseinheit ist derart eingerichtet, dass aus der ermittelten Besetzung oder der ermittelten Änderung der Besetzung in der elektrisch aktiven Störstelle eine Zufallszahl gebildet wird.

Unter einer elektrisch aktiven Störstelle ist eine Störstelle in einem Kristallgitter eines Halbleiterbauelements zu verstehen, die aufgrund ihrer Besetzung mit einem Ladungsträger zwei unterschiedliche Störstellenzustände aufweist, was zu einem zeitlichen Rauschverhalten führt, wie es im Weiteren näher erläutert wird. Das zeitliche Rauschverhalten des Halbleiterbauelements ist statistisch poissonverteilt.

Anders ausgedrückt bedeutet dies, dass unabhängig vom Startzeitpunkt der Betrachtung bzw. des nächsten Übergangs von einem Besetzungszustand in einen anderen Besetzungszustand in der Störstelle die Wahrscheinlichkeit für einen solchen Wechsel proportional zum negativen Exponenten der Zeitdifferenz zum Beginn des Betrachtungszeitraums ist. Diese Eigenschaft entspricht somit der statistischen Abhängigkeit der Poissonverteilung.

n elektrisch aktive Störstellen in einem Kristallgitter eines Halbleiterbauelements weisen somit $2^n$ unterschiedliche Störstellenzustände in dem Halbleiterbauelement auf.

Bei einem Verfahren zum Erzeugen einer Zufallszahl wird bei einem Halbleiterbauelement, welches mindestens eine elektrisch aktive Störstelle in dessen Kristallstruktur aufweist, eine Besetzung oder eine Änderung der Besetzung in der elektrisch aktiven Störstelle ermittelt, anschaulich die Änderung des Rauschstromes und/oder der Rauschspannung Halbleiterbauelements aufgrund der Besetzung oder der Änderung der Besetzung in der elektrisch aktiven Störstelle. Aus der ermittelten Besetzung oder der ermittelten Änderung der Besetzung in der elektrisch aktiven Störstelle wird eine Zufallszahl gebildet.

Durch die Erfindung wird ein Zufallszahlengenerator und ein Verfahren zum Erzeugen einer Zufallszahl angegeben, welches mit geringerem schaltungstechnischen oder systemtechnischer Aufwand in ein gleichverteiltes Signal überführbar ist.

Der erfindungsgemäße Zufallszahlengenerator und das erfindungsgemäße Verfahren sind ferner sehr einfach und in ihr sehr kleiner Dimension als elektronische Schaltung, vorzugsweise als integrierte Schaltung, realisierbar.

Weiterhin ist bei dem erfindungsgemäßen Zufallszahlengenerator eine wichtige Voraussetzung für einen verlässlichen Zufallszahlengenerator erfüllt, da die Besetzung oder die Änderung der Besetzung einer Störstelle bei konstant gehaltener äußerer elektrischen Spannung an dem Halbleiterbauelement in sehr guter Näherung unabhängig von den zu der elektrisch aktiven Störstelle benachbarten Nachbarstörstellen ist und somit die Wahrscheinlichkeit für einen Übergang von einem Besetzungszustand in einen anderen Besetzungszustand nur von der Vorgeschichte, d.h. von den zeitlich vorangegangenen Besetzungszuständen der elektrisch aktiven Störstelle selbst und dem aktuellen Besetzungszustand der betrachteten elektrisch aktiven Störstelle abhängt.

Anschaulich kann die Erfindung teilweise darin gesehen werden, dass das Rauschverhalten einer elektrisch aktiven Störstelle in einem Halbleiterbauelement, vorzugsweise in einem CMOS-Feldeffekttransistor, verwendet wird, um als statistische Referenz für das Erzeugen einer Zufallszahl zu dienen.

Es ist in diesem Zusammenhang darauf hinzuweisen, dass das erfindungsgemäße Ausnutzen des erzeugten RTS-Signals als statistische Referenz zum Erzeugen einer Zufallszahl nicht beschränkt ist auf einen Feldeffekttransistor. Die Erfindung kann bei jedem Halbleiterbauelement eingesetzt werden, das ein solches RTS-Signal erzeugen kann.

Da im Gegensatz zu bisherigen Ausleseverfahren kein Referenzsignal durch ein weiteres durch Phasenrauschen mit statistischen Eigenschaften behaftetes Signal abgetastet wird und das statistische Signal nicht gaussverteilt ist, wie dies beispielsweise in [1] der Fall ist, wird erfindungsgemäß eine Extremwertkorrektur nicht benötigt.

Es ist in diesem Zusammenhang anzumerken, dass für den Fall, dass als Auswertungskriterium des RTS-Signals für die statistische Referenz die Änderung des Besetzungszustandes in der Störstelle verwendet wird kein Problem einer sonst erforderlichen Linearisierung auftritt, d.h. es ist in diesem Fall keine Linearisierung erforderlich, da die Änderung des Besetzungszustandes ohnehin gleichverteilt ist. Dies gilt zumindest für den Fall, dass das Zeitfenster, d.h. der Zeitraum, in welchem jeweils das RTS-Signal betrachtet wird, ausreichend groß ist und eine geeignete Störstelle bei einer geeigneten Gate-Source-Spannung gefunden ist.

Bevorzugte Weiterbildungen der Erfindung ergeben sich aus den abhängigen Ansprüchen.

Das Halbleiterbauelement kann ein in MOS-Technologie hergestelltes Halbleiterelement sein.

Gemäß einer Weiterbildung der Erfindung ist das Halbleiterbauelement ein in CMOS-Technologie hergestelltes Halbleiterbauelement.

Gemäß einer anderen Ausgestaltung der Erfindung ist das Halbleiterbauelement ein Feldeffekttransistor, vorzugsweise ein CMOS-Feldeffekttransistor.

Bei einem CMOS-Feldeffekttransistor ist es bei Kenntnis der Störstellendichte möglich, den jeweiligen CMOS-Feldeffekttransistor so zu dimensionieren, dass statistisch betrachtet im Durchschnitt zumindest in einem vorgegebenen Frequenzbereich genau eine elektrisch aktive Störstelle in dem Kristallgitter des CMOS-Feldeffekttransistors, vorzugsweise an der Silizium/Siliziumdioxid-Grenzfläche des CMOS-Feldeffekttransistors, vorhanden ist. Dies bedeutet, dass in diesem Fall durchschnittlich genau eine Störstelle rauschaktiv ist. Die Störstellendichte Nt kann gemäß einer üblichen Vorgehensweise ermittelt werden, beispielsweise durch Messen des Rauschens in dem Halbleiterbauelement oder mittels des sogenannten "Charge-Pumping"-Verfahrens.

Beispielsweise ergibt sich bei einer Störstellendichte Nt von

$$N_t \left[ \frac{\text{Störstellen}}{\text{cm}^2} \right] \approx 10^{10}$$

unter Verwendung der Beziehung

$$N_t \cdot A = 1,$$

in anderen Worten, unter der Voraussetzung dass pro Feldeffekttransistor mit der Fläche A nur genau eine Störstelle im Durchschnitt vorhanden sein soll für die Fläche A des Feldeffekttransistors:

$$A = \frac{1}{N_t} = 10^{-2} \mu m^2.$$

Diese Voraussetzung und diese Strukturgrößen sind in einem heutzutage üblichen CMOS-Prozess zur Herstellung eines CMOS-Feldeffekttransistors gegeben.

In anderen Worten ausgedrückt, der Feldeffekttransistor ist gemäß einer Ausgestaltung der Erfindung derart dimensioniert, dass er im statistischen Durchschnitt genau eine elektrisch aktive Störstelle in einem vorgegebenen gewünschten, üblicherweise im später verarbeiteten Frequenzbereich (Frequenzband) aufweist.

Gemäß einer Ausgestaltung der Erfindung ist es vorgesehen, dass die Zufallszahlen-Umsetzungs-Einheit derart eingerichtet ist, dass jeweils in einem Abstand einer vorgegebenen, vorzugsweise konstanten, Zeitdauer die Besetzung oder die Änderung der Besetzung in der elektrisch aktiven Störstelle ermittelt werden kann.

Dies entspricht anschaulich der Verwendung eines Zeitfensters, mit dem jeweils das Rauschverhalten "abgefragt", d.h. ermittelt wird.

Es wird jeweils ermittelt, ob aufgrund des ermittelten Signals in dem jeweils betrachteten Zeitfenster dem Signalverlauf in dem Zeitfensters ein erster logischer Wert "0" oder ein zweiter logischer Wert "1" zugeordnet wird.

Die vorgegebene Zeitdauer, d.h. die Größe des Zeitfensters, sollte erheblich länger sein, d.h. einen Faktor von mindestens zwei aufweisen verglichen mit der durchschnittlichen Zeitdauer, in der ein Wechsel von einem Besetzungszustand in einen anderen Besetzungszustand erfolgt, damit die in jeweils einen Bit-Wert übersetzten Umladungsereignisse statistisch voneinander unabhängig sind, und somit dass die Bits, welche die jeweilige Zufallszahl repräsentieren, statistisch voneinander unabhängig sind.

Um die vorgegebene Zeitdauer ermitteln zu können, sollte vorteilhafterweise das Zeitverhalten des Störstellezustands bekannt sein oder es sollten, wie im Weiteren noch näher erläutert wird, eine Mehrzahl verschiedener Halbleiterbauelemente, vorzugsweise eine Mehrzahl verschiedener CMOS-Feldeffekttransistoren zur Verfügung stehen, von dem zumindest einer das zuvor gewählte Zeitverhalten, an dem die vorgegebene Zeitdauer ausgerichtet ist, aufweist, so dass in den jeweiligen Zeitfenstern voneinander statistisch unabhängige Signalverläufe ermittelt werden.

Die Zufallszahlen-Umsetzungs-Einheit kann derart eingerichtet sein, dass die vorgegebene Zeitdauer um ein Mehrfaches länger ist als eine durchschnittliche Zeit einer Änderung der Besetzung in der elektrisch aktiven Störstelle.

Gemäß einer weiteren Ausgestaltung der Erfindung ist eine Mehrzahl, vorzugsweise eine Vielzahl von Halbleiterbauelement vorgesehen mit jeweils mindestens einer elektrisch aktiven Störstelle in der Kristallstruktur des jeweiligen Halbleiterbauelements. Die Besetzungs-Erfassungseinheit ist in diesem Fall mit allen Halbleiterbauelementen gekoppelt. Ferner ist eine Halbleiterbauelement-Auswahleinheit zum Auswählen eines Halbleiterbauelements der Mehrzahl von Halbleiterbauelementen, bei welchem Halbleiterbauelement die Besetzung oder die Änderung der Besetzung in der elektrisch aktiven Störstelle ermittelt werden soll.

Damit kann aus statistischen Gründen bei einer ausreichenden Anzahl vorhandener Halbleiterbauelemente auf eine Justierung (P("Störstelle unbesetzt") = P("Störstelle besetzt") = 0,5) verzichtet werden, da ohnehin eine ausreichende Anzahl von Halbleiterbauelementen mit den gewünschten Eigenschaften verfügbar ist, welche mittels der Halbleiterbauelement-Auswahleinheit ausgewählt werden können.

Es ist in diesem Zusammenhang anzumerken, dass bei dem Zufallszahlengenerator gemäß dieser Ausgestaltung der Erfindung anschaulich ein zweifacher Zufallsprozess auftritt. Es ist nämlich einerseits schon zufällig, bei einem Halbleiterbauelement, vorzugsweise bei einem Transistor, überhaupt ein RTS-Rauschsignal erzeugt wird. Tritt bei einem der Vielzahl der Halbleiterbauelemente ein RTS-Rauschsignal auf, so ist dessen Verlauf ebenfalls zufällig. Die Anzahl der Halbleiterbauelemente in dem Zufallszahlengenerator sollte so gewählt sein, dass gemäß den bereits erwähnten statistischen Regeln ein oder mehrere Halbleiterbauelemente in dem Zufallszahlengenerator enthalten sind, in denen ein gewünschtes RTS-Rauschsignal erzeugt wird.

Gemäß einer weiteren Ausgestaltung der Erfindung ist eine Gate-Spannungs-Justierienrichtung vorgesehen, mittels der die an dem Feldeffekttransistor anliegende Gate-Spannung eingestellt werden kann. Auf diese Weise wird es sehr einfach möglich, die Zeitkonstante für die mittlere Übergangzeit eines Besetzungszustandes in der Störstelle zu justieren.

Alternativ zum oder in Kombination mit dem Ermitteln eines Halbleiterbauelements mit einer geeigneten Störstelle aus einer Vielzahl von Halbleiterbauelementen kann auch eine einfache Justierung der entsprechenden Wahrscheinlichkeit vorgenommen werden.

Ist die Häufigkeit des Auftretens des Zustandes der Störstelle "Störstelle besetzt" ("1"-Zustand) nicht gleich groß wie die Häufigkeit des Auftretens des Zustandes "Störstelle unbesetzt" ("0"-Zustand), so kann mittels des folgenden Verfahrens wieder eine gleiche Verteilung von "0"-Zustand und "1"-Zustand erreicht werden.

Gemäß diesem Verfahren wird anstatt des "0"-Zustandes und des "1"-Zustandes der Störstelle das Auftreten des Übergangs der Störstelle von dem unbesetzten Zustand in den besetzten Zustand (von dem "0"-Zustand in den "1"-Zustand) oder umgekehrt von dem besetzten Zustand in den unbesetzten Zustand (von dem "1"-Zustand in den "0"-Zustand) detektiert.

In diesem Fall wird der neue "1"-Zustand durch das Detektieren mindestens eines Übergangs, der neue "0"-Zustand durch das Fehlen eines solchen Ereignisses definiert.

Durch die Wahl eines geeigneten Zeitfensters für die Entscheidung ist wieder eine gleich große Wahrscheinlichkeit für beide neuen Zustände möglich.

In diesem Zusammenhang sollte noch erwähnt werden, dass sinnvollerweise die Übergänge von dem wahrscheinlicheren Zustand in den unwahrscheinlicheren Zustand detektiert werden sollten.

Weiterhin kann eine Spannungsquelle vorgesehen sein, die mit der Halbleiterbauelement-Auswahleinheit derart gekoppelt ist, dass die Halbleiterbauelement-Auswahleinheit die von der Spannungsquelle bereitgestellte elektrische Spannung an dem Gate-Anschluss des ausgewählten Feldeffekttransistors der Mehrzahl der Feldeffekttransistoren anlegt. Die Drain-Anschlüsse aller Feldeffekttransistoren sind gemäß dieser Ausgestaltung der Erfindung mit der Besetzungs-Erfassungseinheit gekoppelt.

Die Besetzungs-Erfassungseinheit kann einen Bandpass-Filter aufweisen, dessen erster Eingang mit den Drain-Anschlüssen der Feldeffekttransistoren gekoppelt ist und dessen zweiter Eingang mit den Source-Anschlüssen der Feldeffekttransistoren gekoppelt ist.

Mit dem Bandpass-Filter wird der Störeffekt, der von eventuell vorhandenen weiteren elektrisch aktiven Störstellen erzeugt wird, reduziert.

Es ist in diesem Zusammenhang anzumerken, dass dieser Störeffekt auch durch eine ausreichende Anzahl von bereitgestellten Halbleiterbauelementen, vorzugsweise CMOS-Feldeffekttransistoren, abgefangen werden kann.

Ferner kann die Besetzungs-Erfassungseinheit einen Differenzverstärker aufweisen, der zwischen das Bandpass-Filter und die Zufallszahlen-Umsetzungseinheit geschaltet ist und der das RTS-Signal auf einen vorgegebenen, vorzugsweise logischen, Pegel verstärkt.

Die Zufallszahlen-Umsetzungseinheit kann als Komparator ausgestaltet sein.

Ausführungsbeispiele der Erfindung sind in den Figuren dargestellt und werden im Weiteren näher erläutert.

Es zeigen

Figur 1              eine Prinzipskizze eines Zufallszahlengenerators gemäß einem Ausführungsbeispiel der Erfindung;

Figuren 2a und 2b    einen Signalverlauf eines RTS-Signals in einem Halbleiterbauelement im zeitlichen Verlauf (Figur 2a) und im Frequenzraum (Figur 2b);

Figur 3              ein Rauschspektrum von minimalen CMOS-Feldeffekttransistoren, hergestellt in einem CMOS-Prozess mit einer minimalen Strukturgröße von 0,25 $\mu$m;

Figur 4              den Signalverlauf des RTS-Signals aus Figur 2a mit symbolisierten Zeitfenstern;

Figur 5              eine schaltungstechnische Realisierung eines Zufallszahlengenerators gemäß einem Ausführungsbeispiel der Erfindung;

Figur 6              eine Skizze eines Zufallszahlengenerators gemäß einem weiteren Ausführungsbeispiel der Erfindung.

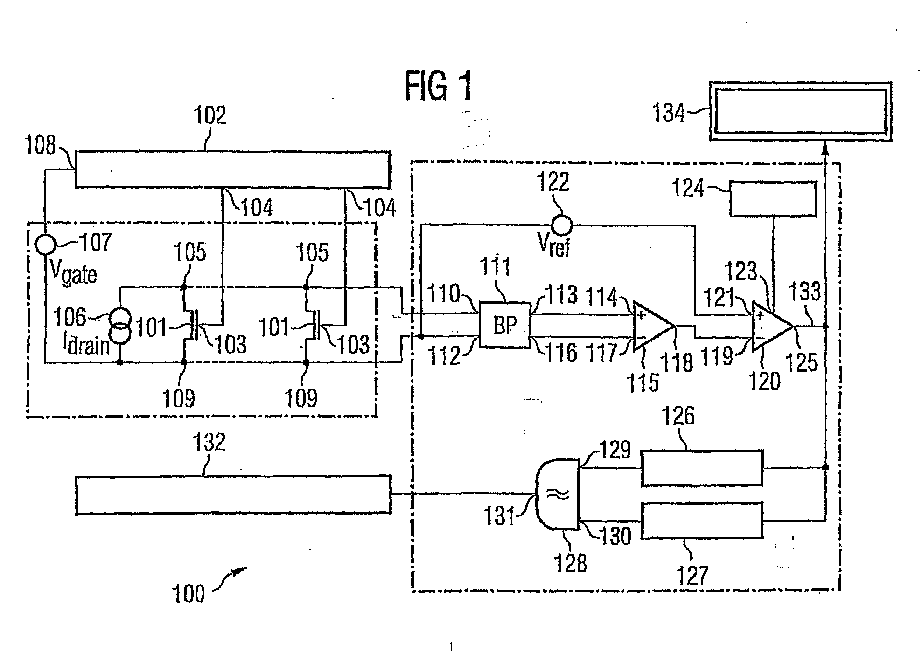

**Fig.1** zeigt einen Zufallszahlengenerator 100 gemäß einem ersten Ausführungsbeispiel der Erfindung.

Der Zufallszahlengenerator 100 weist eine Vielzahl von CMOS-Feldeffekttransistoren 101 als eine Vielzahl von Halbleiterbauelementen auf, sowie eine Feldeffekttransistoren-Auswahleinheit 102 zum Auswählen zumindest eines CMOS-Feldeffekttransistors 101.

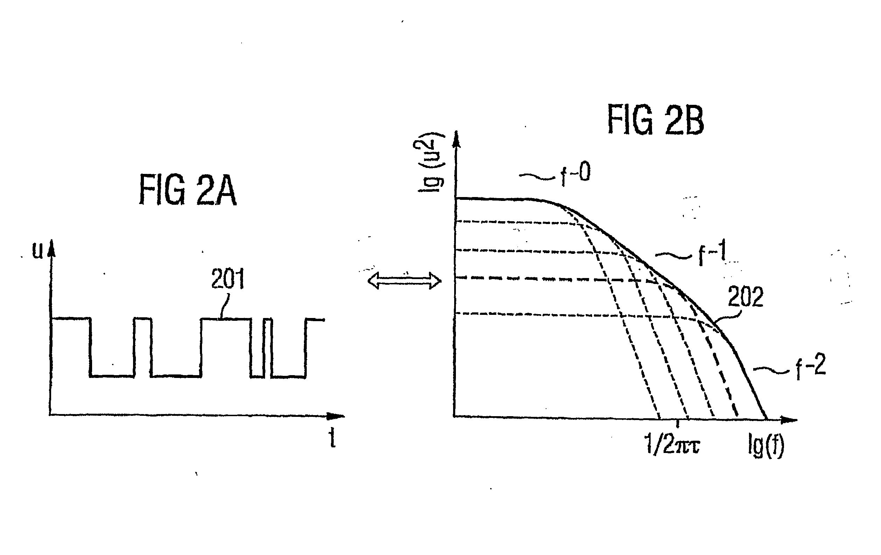

Die CMOS-Feldeffekttransistoren 101 weisen eine Gatelänge von 0,13 $\mu$m und eine Gatelänge von ebenfalls 0,13 $\mu$m auf. Jeder CMOS-Feldeffekttransistor 101 weist mindestens eine elektrisch aktive Störstelle auf, mittels der ein in **Fig.2a** symbolisch als Rauschsignal 201 in der zeitlichen Darstellung dargestelltes Rauschverhalten erzeugt wird.

Das Rauschsignal 201 stellt anschaulich ein Generations-/Rekombinationsrauschen als Zufallssignal im Zeitraum entlang der Zeitachse t dar.

**Fig.2b** zeigt das Rauschsignal 201 in logarithmierter Darstellung im Frequenzspektrum als Frequenzsignal 202.

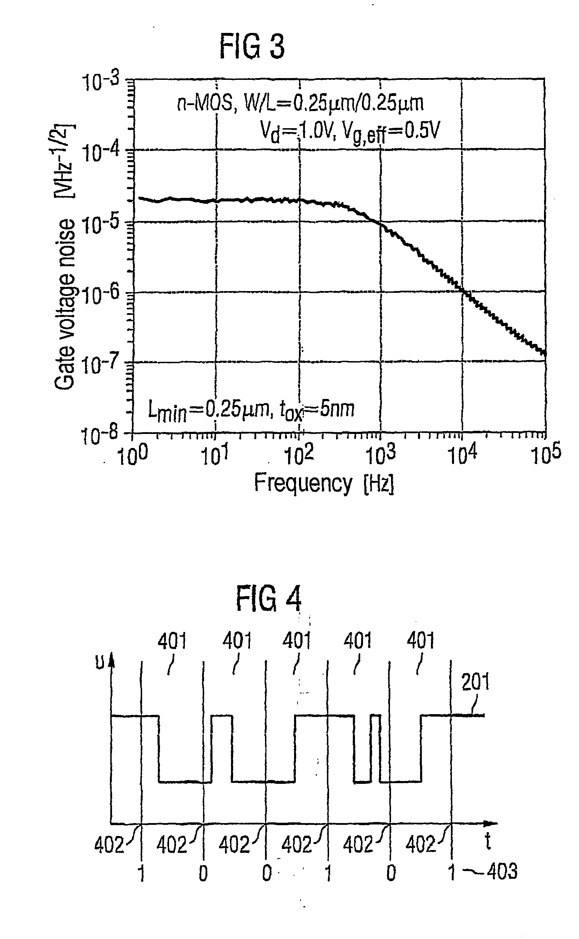

**Fig.3** zeigt beispielhaft einige Rauschspektren 301 von CMOS-Feldeffekttransistoren, die mit einer CMOS-Technologie mit einer minimalen Strukturgröße von 0,25 $\mu$m hergestellt worden sind.

Der Gate-Anschluss 103 jedes CMOS-Feldeffekttransistors 101 ist jeweils an einen Ausgang 104 der Feldeffekttransistoren-Auswahleinheit 102, d.h. anschaulich einem Dekoder, angeschlossen.

Ferner ist der Drain-Anschluss 105 eines jeden CMOS-Feldeffekttransistors 101 mit einer Stromquelle 106 gekoppelt. Über eine Spannungsquelle 107, die eine Gate-Spannung $V_{Gate}$ bereitstellt, ist ein Eingang 108 der Feldeffekttransistoren-Auswahleinheit 102 mit dem Source-Anschluss 109 eines jeden CMOS-Feldeffekttransistors 101 gekoppelt.

Mittels der Feldeffekttransistoren-Auswahleinheit 102 wird ein CMOS-Feldeffekttransistor 101 ausgewählt, in dem an den Gate-Anschluss 103 des ausgewählten CMOS-Feldeffekttransistor 101 die Gate-Spannung $V_{Gate}$ angelegt wird.

Die Drain-Anschlüsse 105 aller CMOS-Feldeffekttransistoren 103 sind mit einem ersten Eingang 110 eines Bandpass-Filters 111 gekoppelt. Die Source-Anschlüsse 109 aller CMOS-Feldeffekttransistoren 103 sind mit einem zweiten Eingang 112 des Bandpass-Filters 111 gekoppelt.

Ein erster Ausgang 113 des Bandpass-Filters 111 ist mit einem nicht-invertierenden Eingang 114 eines Differenzverstärkers 115 gekoppelt. Ferner ist ein zweiter Ausgang 116 des Bandpass-Filters 111 mit dem invertierenden Eingang 117 des Differenzverstärkers 115 gekoppelt.

Der Ausgang 118 des Differenzverstärkers 115 ist mit dem invertierenden Eingang 119 eines getakteten Komparators 120 gekoppelt, dessen nicht-invertierender Eingang 121 über eine Referenz-Spannungsquelle 122 (die eine Referenzspannung $V_{ref}$ bereitstellt) mit den Source-Anschlüssen 109 aller CMOS-Feldeffekttransistoren 101 gekoppelt ist.

Der getaktete Komparator 120 weist ferner einen Takteingang 123 auf und wird über diesen mittels eines Taktsignals 124 getaktet.

Anschaulich wird somit mittels des Dekoders, d.h. mittels der Feldeffekttransistoren-Auswahleinheit 102 die von der Gate-Spannungsquelle 107 bereitgestellte Gate-Source-Spannung $V_{Gate}$ an den ausgewählten CMOS-Feldeffekttransistor 101 durchgeschaltet, wobei alle anderen, nicht ausgewählten CMOS-Feldeffekttransistoren 101 mit einer Gate-Source-Spannung $V_{Gate} = 0$ angesteuert werden.

Das jeweilige Rauschsignal, das über den Source-Anschluss 109 und den Drain-Anschluss 105 des ausgewählten CMOS-Feldeffekttransistors 101 fließt, wird anschaulich über den Bandpass-Filter 111 und den Differenzverstärker 115 auf den getakteten Komparator 120 geleitet, der das Rauschsignal mit einem Referenzsignal, d.h. der Referenzspannung $V_{ref}$ vergleicht und daraus einen dem von dem CMOS-Feldeffekttransistor 101 erzeugten Rauschsignal entsprechenden ersten logischen Wert "0" oder zweiten logischen Wert "1" als ein Zufallssignal 133 an dem Ausgang 125 des Komparators 120 erzeugt.

Der Ausgang 125 des Komparators 120 ist ferner mit einem ersten Zähler 126 gekoppelt sowie mit einem zweiten Zähler 127. Mittels des ersten Zählers 126 wird die Auftrittshäufigkeit eines Signals mit dem ersten logischen Wert "0" gezählt und mittels des zweiten Zählers 127 wird die Auftrittshäufigkeit eines Signals mit dem zweiten logischen Wert "1" an dem Ausgang 125 des Komparators 120 gezählt:

Die beiden Zähler 126 und 127 sind über ein UND-Gatter 128 mit einem Speicher 132 gekoppelt. Der erste Zähler 126 ist mit einem ersten Eingang 129 des UND-Gatters 128 gekoppelt und der zweite Zähler 127 ist mit einem zweiten Eingang 130 des UND-Gatters 128 gekoppelt. Der Ausgang 131 des UND-Gatters 128 ist mit dem Speicher 132 gekoppelt.

Es ist in diesem Zusammenhang anzumerken, dass sowohl die Gate-Spannung $V_{Gate}$ als auch die Referenzspannung $V_{ref}$ optional variiert werden können oder über eine zusätzliche Rückkopplungsschleife mittels einer nicht dargestellten Justiereinrichtung nachjustiert, d.h. angepasst werden können.

Für diesen Fall wird der Speicher 132 verwendet, um die geeigneten Zustände zu jeder Gate-Spannung $V_{Gate}$ zu speichern und diese entsprechend den Umgebungsbedingungen zu verändern.

Da das statistische Verhalten der elektrisch aktiven Störstellen und deren örtliche Anordnung entlang der Oberfläche des jeweiligen CMOS-Feldeffekttransistors 101 bekannt ist, kann eine für eine hohe Ausbeutung von integrierten Schaltungen notwendige Zahl von CMOS-Feldeffekttransistoren 101 pro elektrische Schaltung auf einfache Weise berechnet werden.

Mittels der Feldeffekttransistoren-Auswahleinheit 102 wird somit ein geeigneter CMOS-Feldeffekttransistor 101 auf der Basis eines zuvor durchgeführten Kalibrierungsverfahrens ausgewählt, wobei im Rahmen des Kalibrierungsverfahrens das Zeitverhalten, d.h. die zeitliche Veränderung der Störstellenzustände des jeweiligen CMOS-Feldeffekttransistors 101 ermittelt wird.

Als Ergebnis des Kalibrierungsverfahrens erhält man den für den Zufallszahlengenerator 100 am besten geeigneten CMOS-Feldeffekttransistor 101, das heißt denjenigen CMOS-Feldeffekttransistor 101, bei dem die Wahrscheinlichkeit für einen ersten Besetzungszustand P(1) ungefähr gleich ist der Wahrscheinlichkeit für das Vorliegen des zweiten Besetzungszustandes P(0).

Das Kalibrierungsverfahren muss in den meisten Fällen nur ein Mal durchgeführt werden, da die Übergangswahrscheinlichkeit der Störstelle in dem jeweiligen CMOS-Feldeffekttransistor 101 bei geeignetem Aufbau der Spannungsquelle 107 für den ausgewählten CMOS-Feldeffekttransistor 101 nur in geringem Maße von den äußeren Randbedingungen, beispielsweise einer Versorgungsspannungs-Schwankung oder einer Temperaturschwankung, abhängen.

Da die Zeitkonstante für die mittlere Übergangszeit der Störstelle von einem ersten Besetzungszustand in einen zweiten Besetzungszustand und umgekehrt eine Funktion der jeweils angelegten Gate-Spannung ist, kann die Zeitkonstante in einem gewissen Rahmen justiert, d.h. eingestellt werden durch Veränderung der jeweils angelegten Gate-Spannung.

Die Einstellbarkeit der Zeitkonstante kann genutzt werden, um die gewünschte Gleichverteilung der beiden Wahrscheinlichkeiten P(0) = P(1) = 0,5 zu erzielen.

Alternativ kann zum Erreichen der Gleichverteilung der beiden Wahrscheinlichkeiten P(0) = P(1) = 0,5 die Änderung des Besetzungszustandes einer Störstelle entweder von dem Besetzungszustand "besetzt" zu dem Besetzungszustand "unbesetzt" oder von dem Besetzungszustand "unbesetzt" zu dem Besetzungszustand "besetzt" erfasst werden.

Steht eine ausreichende Zahl von CMOS-Feldeffekttransistoren 101 als mögliche Quelle für den Zufallszahlengenerator 100 zur Verfügung, so ist eine Justierung üblicherweise nicht erforderlich, da man die Zahl der zur Verfügung stehenden CMOS-Feldeffekttransistoren 101 so einstellen kann, dass mit einer Wahrscheinlichkeit von fast 100 Prozent ein CMOS-Feldeffekttransistor 101 in der Vielzahl von CMOS-Feldeffekttransistoren 101 enthalten ist, der die gewünschte Bedingungen der Gleichverteilung des erzeugten Rauschsignals, d.h. P(0) = P(1) = 0,5, in ausreichender Genauigkeit erfüllt.

Da es sich bei dem CMOS-Feldeffekttransistoren 101 ohnehin um sehr kleine Feldeffekttransistoren handelt, verbrauchen die CMOS-Feldeffekttransistoren 101, die der gewünschten Bedingungen nicht genügen, kaum Chipfläche.

Der Komparator 120 wird derart getaktet, dass in einem vorgegebenen Zeitabstand, der anschaulich jeweils ein Zeitfenster 401 bildet (vgl. **Fig.4**), jeweils einen Ausgangssignalwert 124 an dem Ausgang 125 des Komparators 120 zu jeweils einem Ermittlungszeitpunkt 402 bereitgestellt wird. Der Wert des Ausgängssignals 124 zu jeweils einem Zeitpunkt eines Zeitfensters 401 bildet ein Bit der zu bildenden Zufallszahl 134. In **Fig.4** ist ein 6-Bit Zufallswort 403 als Zufallszahl 134 beispielhaft dargestellt.

Ein erheblicher Vorteil des Zufallszahlengenerators 100 ist darin zu sehen, dass er im Gegensatz zu den Zufallszahlengeneratoren gemäß dem Stand der Technik

- kaum eine digitale Justierung benötigt und diese ohnehin nur im Rahmen der Initialisierung,
- keine komplizierten, möglichst hochauflösenden A/D-Wandler, und
- dass er einfach unabhängig von jeglichen (nichtdifferentiellen) Referenzgrößen ausführbar ist.

Als Konsequenz daraus ist das erfindungsgemäße Verfahren zum Erzeugen einer Zufallszahl auch unempfindlich hinsichtlich eines Überkoppelns aus anderen Teilen einer größeren Schaltung, in der der Zufallszahlengenerator 100 integriert ist, sowie hinsichtlich nicht-statischer Einflüsse, die sich aus diesen Referenzgrößen ergeben.

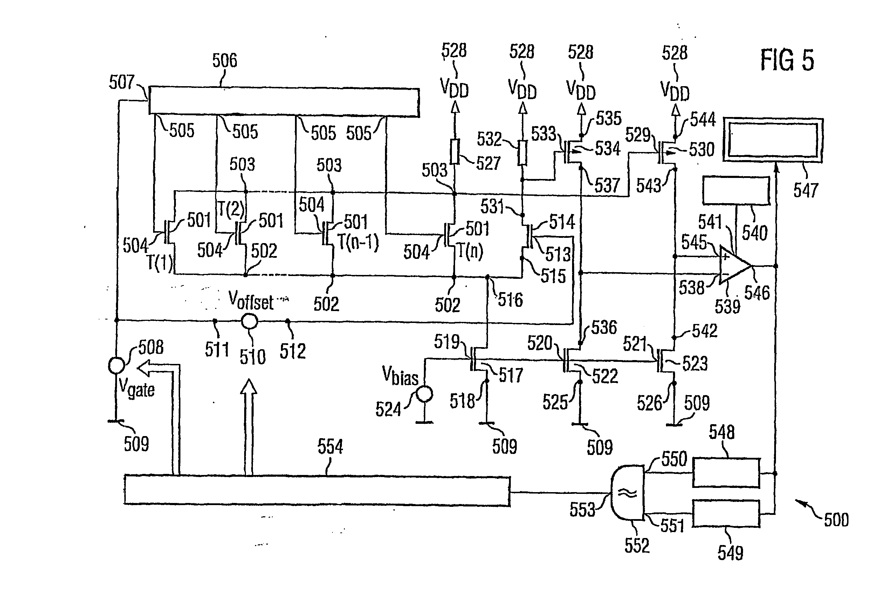

**Fig.5** zeigt eine schaltungstechnische Realisierung des Zufallszahlengenerators 500.

Der Zufallszahlengenerator 500 weist eine Mehrzahl von CMOS-Feldeffekttransistoren 501, im Weiteren auch als Minimaltransistoren 501 bezeichnet, auf, welche im statistischen Durchschnitt jeweils eine elektrisch aktive Störstelle in ihrem Kristallgitter aufweisen. Die Störstelle ist jeweils derart eingerichtet, dass in dem. Halbleiterbauelement ein RTS-Signal erzeugt wird, welches über den Kanalbereich des CMOS-Feldeffekttransistors 501 von dem jeweiligen Source-Anschluss 502 zu dem Drain-Anschluss 503 geleitet wird, wenn an dem Gate-Anschluss 504 eine ausreichend große Gate-Spannung $V_{Gate} \neq 0$ anliegt.

Der Gate-Anschluss 504 eines jeden CMOS-Feldeffekttransistors 501 ist mit jeweils einem Ausgang 505 des Dekoders 506 gekoppelt. Der Eingang 507 des Dekoders 506 ist mit einer Gate-Spannungsquelle 508 gekoppelt und darüber mit dem Massepotential 509.

Zwischen die Gate-Spannungsquelle 508 und dem Eingang 507 des Dekoders 506 ist ein erster Anschluss 511 einer Offset-Spannungsquelle 510 geschaltet, deren zweiter Anschluss 512 mit dem Gate-Anschluss 513 eines ersten weiteren CMOS-Feldeffekttransistors 514 gekoppelt ist, dessen Source-Anschluss 515 mit den Source-Anschlüssen 502 der CMOS-Feldeffekttransistoren 501 gekoppelt ist.

Anstatt des ersten weiteren CMOS-Feldeffekttransistors 514 können alternativ eine Mehrzahl von Minimaltransistoren vorgesehen sein. Auf diese Weise wird die Symmetrie der Differenzstufe erhöht und damit ihre Unempfindlichkeit gegenüber äußeren Störungen. Das erfindungsgemäße Verfahren zum Erzeugen einer Zufallszahl wird davon jedoch nur mittelbar beeinflusst, da immer ein Paar von Minimaltransistoren an die Differenzstufe angeschlossen werden kann, von denen nur einer ein ausgeprägtes RTS-Signal aufweist.

Die Offset-Spannungsquelle 510 stellt eine Offset-Spannung $V_{offset}$ bereit. Die Offset-Spannung dient zur Justierung von Halbleiterbauelementen-Mismatch.

Die Source-Anschlüsse 502 der CMOS-Feldeffekttransistoren 501 sowie der Source-Anschluss 515 des ersten weiteren CMOS-Feldeffekttransistors 514 sind mit dem Drain-Anschluss 516 eines zweiten weiteren CMOS-Feldeffekttransistors 517 gekoppelt, dessen Source-Anschluss 518 mit dem Massepotential 509 gekoppelt ist.

An den Gate-Anschluss 519 des zweiten weiteren CMOS-Feldeffekttransistor 517 sowie an die Gate-Anschlüsse 520 und 521 eines dritten weiteren CMOS-Feldeffekttransistors 522 und eines vierten weiteren CMOS-Feldeffekttransistors 523 ist eine Bias-Spannungsquelle 524 angeschlossen, die eine Bias-Spannung $V_{Bias}$ bereitstellt.

Die Source-Anschlüsse 525 und 526 des dritten weiteren CMOS-Feldeffekttransistors 522 und des vierten weiteren CMOS-Feldeffekttransistors 523 sind ebenfalls mit dem Massepotential 509 gekoppelt.

Die Source-Anschlüsse 503 der CMOS-Feldeffekttransistoren 501 sind über einen ersten elektrischen Widerstand 527 mit dem Betriebspotential $V_{DD}$ 528 gekoppelt.

Ferner sind die Source-Anschlüsse 503 der CMOS-Feldeffekttransistoren 501 mit dem Gate-Anschluss 529 eines fünften weiteren CMOS-Feldeffekttransistors 530 gekoppelt.

Der Drain-Anschluss 531 des ersten weiteren CMOS-Feldeffekttransistor 514 ist über einen zweiten elektrischen Widerstand 532 ebenfalls mit dem Betriebspotential $V_{DD}$ 528 gekoppelt.

Ferner ist der Drain-Anschluss 531 des ersten weiteren CMOS-Feldeffekttransistors 514 mit dem Gate-Anschluss 533 eines sechsten weiteren CMOS-Feldeffekttransistors 534 gekoppelt, dessen Drain-Anschluss 535 ebenfalls mit dem Betriebspotential $V_{DD}$ 528 gekoppelt ist.

Der Drain-Anschluss 536 des dritten weiteren CMOS-Feldeffekttransistors 522 ist mit dem Source-Anschluss 537 des sechsten weiteren CMOS-Feldeffekttransistors 534 und mit dem invertierenden Eingang 538 eines getakteten Komparators 539, der mittels eines Zeitfenster-Steuerungssignals 540 über einen Takteingang 541 getaktet wird, gekoppelt.

Der Drain-Anschluss 542 des vierten weiteren CMOS-Feldeffekttransistor 523 ist mit dem Source-Anschluss 543 des fünften weiteren CMOS-Feldeffekttransistors 530, dessen Drain-Anschluss 544 ebenfalls mit dem Betriebspotential $V_{DD}$ 528 gekoppelt ist, und mit dem nicht-invertierenden Eingang 545 des getakteten Komparators 539 gekoppelt.

An dem Ausgang 546 des Komparators 539 liegt zu jeweils einem Zeitpunkt eines Zeitfensters ein Bit-Wert als AusgangssignalWert an. Über die gesamte betrachtete Zeitdauer wird somit eine Folge von Bits als Zufallszahl 547 aus den jeweiligen Ausgangssignal-Werten erzeugt.

Der Ausgang 546 des Komparators 539 ist ferner mit einem ersten Zähler 548 zum Zählen der auftretenden Ausgangssignal-Werte mit einem ersten logischen Wert "0" und mit einem zweiten Zähler 549 zum Ermitteln der Auftrittshäufigkeit eines Ausgangs-Signalwerts mit einem zweiten logischen Wert "1" gekoppelt.

Die beiden Zähler 548 und 549 sind mit jeweils einem Eingang 550, 551 eines logischen UND-Gatters 552 gekoppelt, dessen Ausgang 553 mit einem Speicher 554 gekoppelt ist.

In diesem Zusammenhang ist anzumerken, dass die schaltungstechnische Realisierung des Zufallszahlengenerators 500 einen differentiellen Zufallszahlengenerator 500 darstellt, d.h. einen Zufallszahlengenerator 500 unter Verwendung differentieller Signalverarbeitung in CMOS-Schaltungstechnik. Die CMOS-Schaltungstechnik ist besonders robust gegenüber externen Störungen.

Die Fläche des CMOS-Feldeffekttransistors 501, der jeweils von dem Dekoder 506 ausgewählt wird, sollte erheblich kleiner sein, vorzugsweise um mindestens den Faktor 5, als die Fläche der weiteren CMOS-Feldeffekttransistoren 514, 517, 522, 523, 534, 530.

Weiterhin sollten der ausgewählte CMOS-Feldeffekttransistor 501 und der erste weitere CMOS Feldeffekttransistor 514 die gleiche Stromtreibfähigkeit aufweisen.

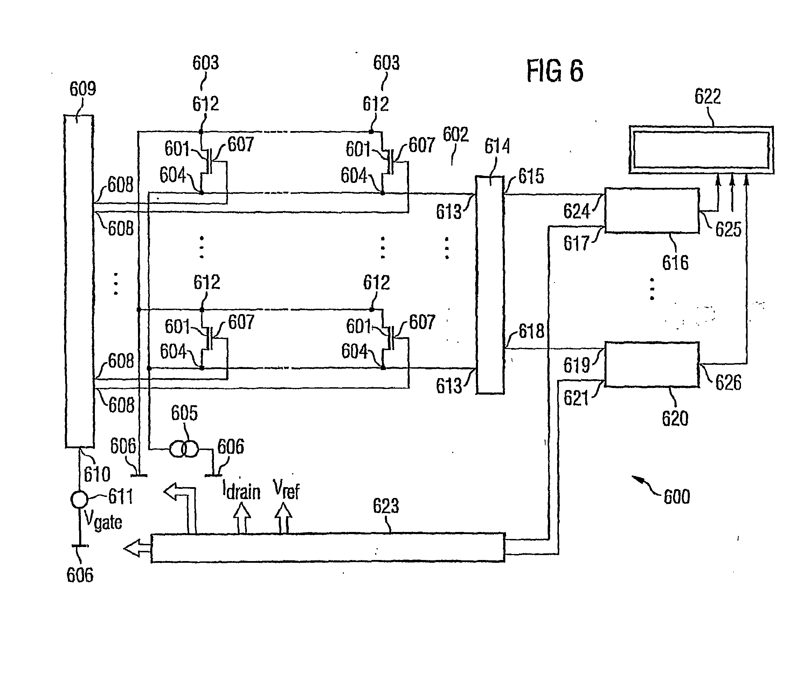

**Fig.6** zeigt einen Zufallszahlengenerator 600 für die parallele Erzeugung eines Zufallswortes gemäß einem weiteren Ausführungsbeispiel der Erfindung.

Der Zufallszahlengenerator 600 weist eine Vielzahl von CMOS-Feldeffekttransistoren 601 auf, die matrixförmig in einer Mehrzahl von Zeilen 602 und Spalten 603 angeordnet sind.

Der Source-Anschluss 604 eines jeden CMOS-Feldeffekttransistors 601 ist mit jedem Source-Anschluss 604 eines jeden anderen CMOS-Feldeffekttransistors 601 gekoppelt sowie über eine Stromquelle 605 mit dem Massepotential 606.

Der Gate-Anschluss 607 eines jeden CMOS-Feldeffekttransistors 601 ist mit jeweils einem Ausgang 608 eines Dekoders 609 gekoppelt, dessen Eingang 610 über eine Gate-Spannungsquelle 611 mit dem Massepotential 606 gekoppelt ist.

Die Drain-Anschlüsse 612 aller CMOS-Feldeffekttransistoren 601 sind miteinander sowie mit dem Massepotential 606 gekoppelt.

Die Source-Anschlüsse 604 von den sich jeweils in einer gleichen Zeile 602 befindenden CMOS-Feldeffekttransistoren 601 sind miteinander sowie mit jeweils einem Eingang 613 eines Multiplexers 614 gekoppelt.

Ein erster Ausgang 615 des Multiplexers 614 ist mit einem ersten Eingang 624 einer ersten Zufallszahlen-Umsetzungseinheit 616 gekoppelt, deren zweiter Eingang 615 an eine Speicher- und Steuerungseinheit 617 angeschlossen ist, mittels der sowohl die Gate-Spannung $V_{Gate}$, der Drain-Strom $I_{Drain}$ der jeweiligen CMOS-Feldeffekttransistoren 601 und die im Zusammenhang mit dem Zufallszahlengenerator 500 aus **Fig.5** erläuterten Referenzspannung $V_{ref}$ gesteuert werden.

Ein n-ter Ausgang 618 des Multiplexers 614 ist mit einem ersten Eingang 619 einer n-ten Zufallszahlen-Umsetzungseinheit 620 gekoppelt, deren zweiter Eingang 621 ebenfalls mit der Steuerungseinheit 617 gekoppelt ist.

An jedem Ausgang 625, 626 der n Zufallszahlen-Umsetzungseinheiten 616, 620 liegt jeweils ein Bit eines eine Zufallszahl repräsentierenden Ausgangssignalwerts an, welche gemeinsam, d.h. anschaulich im Parallelbetrieb, die Zufallszahl 622 erzeugen.

Der in Fig.6 dargestellte Zufallszahlengenerator 600 eignet sich insbesondere zum Erzeugen einer-längeren binären Zufallszahl, da das Erzeugen der Zufallszahl mittels des Zufallszahlengenerator 600 parallelisiert ist.

In diesem Zusammenhang ist es vorteilhaft, die CMOS-Feldeffekttransistoren 601 aus demselben Array, d.h. derselben Matrix für die verschiedenen Bits der Zufallszahl zu verwenden.

Aus statistischen Gründen sollte in diesem Fall jedoch die Anzahl der Transistoren in der Matrix erhöht werden, um zu gewährleisten, dass eine ausreichende Zahl von CMOS-Feldeffekttransistoren 601 die gewünschten Anforderungen an die Gleichverteilung der Auftrittwahrscheinlichkeit der Besetzungszustände erfüllt.

In diesem Dokument sind folgende Veröffentlichungen zitiert:

[1] EP 0 930 665 A2

[2] US 5,706,218

[3] US 4,176,399

[4] US 6,247,033

[5] US 4,347,931

[6] EP 0 981 081 A2

[7] Nicolas Hörnel, "Physikalische Ursachen und Wirkung von Rauschquellen in Sperrschicht-Feldeffekttransistors", Dissertation an der Fakultät für Physik der Ludwig-Maximilians-Universität München, 25.10.2001.

**Bezugszeichenliste**

100    Zufallszahlengenerator
101    CMOS-Feldeffekttransistor
102    Dekoder
103    Gate-Anschluss CMOS-Feldeffekttransistor
104    Ausgang Dekoder
105    Drain-Anschluss CMOS-Feldeffekttransistor
106    Stromquelle
107    Gate-Spannungsquelle
108    Eingang Dekoder
109    Source-Anschluss CMOS-Feldeffekttransistor
110    Erster Eingang Bandpass-Filter
111    Bandpass-Filter
112    Zweiter Eingang Bandpass-Filter
113    Erster Ausgang Bandpass-Filter
114    Nicht-invertierender Eingang Differenzverstärker
115    Differenzverstärker

| 116 | Zweiter Ausgang Bandpass-Filter |
| 117 | Invertierender Eingang Differenzverstärker |
| 118 | Ausgang Differenzverstärker |
| 119 | Invertierender Eingang Komparator |
| 120 | Komparator |
| 121 | Nicht-invertierender Eingang Komparator |
| 122 | Referenzspannungsquelle |
| 123 | Takteingang |
| 124 | Taktsignale |
| 125 | Ausgang Komparator |
| 126 | Erster Zähler |
| 127 | Zweiter Zähler |
| 128 | UND-Gatter |
| 129 | Erster Eingang UND-Gatter |
| 130 | Zweiter Eingang UND-Gatter |
| 131 | Ausgang UND-Gatter |
| 132 | Speicher |
| 133 | Ausgangssignale |
| 134 | Zufallszahl |

| 201 | Signalverlauf im Zeitdiagramm |
| 202 | Signalverlauf im Frequenzspektrum |

| 301 | Rauschspektren |

| 401 | Zeitfenster |
| 402 | Ermittlungszeitpunkt |
| 403 | Bit-Wert |

| 500 | Zufallszahlengenerator |
| 501 | CMOS-Feldeffekttransistor |
| 502 | Source-Anschluss CMOS-Feldeffekttransistor |
| 503 | Drain-Anschluss CMOS-Feldeffekttransistor |
| 504 | Gate-Anschluss CMOS-Feldeffekttransistor |
| 505 | Ausgang Dekoder |
| 506 | Dekoder |
| 507 | Eingang Dekoder |
| 508 | Gate-Spannungsquelle |
| 509 | Massepotential |
| 510 | Offset-Spannungsquelle |
| 511 | Erster Anschluss Offset-Spannungsquelle |
| 512 | Zweiter Anschluss Offset-Spannungsquelle |
| 513 | Gate-Anschluss erster weiterer CMOS-Feldeffekttransistor |
| 514 | Erster weiterer CMOS-Feldeffekttransistor |
| 515 | Source-Anschluss erster weiterer CMOS-Feldeffekttransistor |
| 516 | Drain-Anschluss zweiter weiterer CMOS-Feldeffekttransistor |
| 517 | Zweiter weiterer CMOS-Feldeffekttransistor |
| 518 | Source-Anschluss zweiter weiterer CMOS-Feldeffekttransistor |
| 519 | Gate-Anschluss zweiter weiterer CMOS-Feldeffekttransistor |
| 520 | Gate-Anschluss dritter weiterer CMOS-Feldeffekttransistor |
| 521 | Gate-Anschluss vierter weiterer CMOS-Feldeffekttransistor |
| 522 | Dritter weiterer CMOS-Feldeffekttransistor |
| 523 | Vierter weiterer CMOS-Feldeffekttransistor |
| 524 | Bias-Spannungsquelle |
| 525 | Source-Anschluss dritter weiterer CMOS-Feldeffekttransistor |
| 526 | Source-Anschluss vierter weiterer CMOS-Feldeffekttransistor |
| 527 | Erster elektrischer Widerstand |
| 528 | Betriebspotential |

529    Gate-Anschluss fünfter weiterer CMOS-Feldeffekttransistor
530    Fünfter weiterer CMOS-Feldeffekttransistor
531    Drain-Anschluss erster weiterer CMOS-Feldeffekttransistor
532    Zweiter elektrischer Widerstand
533    Gate-Anschluss sechster weiterer CMOS-Feldeffekttransistor
534    Sechster weiterer CMOS-Feldeffekttransistor
535    Drain-Anschluss sechster weiterer CMOS-Feldeffekttransistor
536    Drain-Anschluss dritter weiterer CMOS-Feldeffekttransistor
537    Source-Anschluss sechster weiterer CMOS-Feldeffekttransistor
538    Invertierender Eingang Komparator
539    Komparator
540    Taktsignale
541    Takteingang
542    Drain-Anschluss vierter weiterer CMOS-Feldeffekttransistor
543    Source-Anschluss fünfter weiterer CMOS-Feldeffekttransistor
544    Drain-Anschluss fünfter weiterer CMOS-Feldeffekttransistor
545    Nicht-invertierender Eingang Komparator
546    Ausgang Komparator
547    Zufallszahl
548    Erster Zähler
549    Zweiter Zähler
550    Erster Eingang UND-Gatter
551    Zweiter Eingang UND-Gatter
552    UND-Gatter
553    Ausgang UND-Gatter
554    Speicher

600    Zufallszahlengenerator
601    CMOS-Feldeffekttransistor
602    Zeile
603    Spalte
604    Source-Anschluss CMOS-Feldeffekttransistor
605    Stromquelle
606    Massepotential
607    Gate-Anschluss CMOS-Feldeffekttransistor
608    Ausgang Dekoder
609    Dekoder
610    Eingang Dekoder
611    Gate-Spannungsquelle
612    Drain-Anschluss CMOS-Feldeffekttransistor
613    Eingang Multiplexer
614    Multiplexer
615    Erster Eingang erste Zufallszahl-Umsetzungseinheit
616    Erste Zufallszahl-Umsetzungseinheit
617    Zweiter Eingang erste Zufallszahl-Umsetzungseinheit
618    n-ter Ausgang Multiplexer
619    Erster Eingang n-te Zufallszahl-Umsetzungseinheit
620    n-te Zufallszahl-Umsetzungseinheit
621    Zweiter Eingang n-te Zufallszahl-Umsetzungseinheit
622    Zufallszahl
623    Steuerungseinheit
624    Erster Eingang erste Zufallszahl-Umsetzungseinheit
625    Ausgang erste Zufallszahl-Umsetzungseinheit
626    Ausgang n-te Zufallszahl-Umsetzungseinheit

**Patentansprüche**

1. Zufallszahlengenerator

   • mit einem Halbleiterbauelement mit mindestens einer elektrisch aktiven Störstelle in der Struktur des Halbleiterbauelements,
   • mit einer Besetzungs-Erfassungseinheit, die mit dem Halbleiterbauelement gekoppelt ist und die derart eingerichtet ist, dass eine Besetzung oder eine Änderung der Besetzung in der elektrisch aktiven Störstelle ermittelt werden kann, und
   • mit einer Zufallszahlen-Umsetzungseinheit, die mit der Besetzungs-Erfassungseinheit gekoppelt ist und die derart eingerichtet ist, dass aus der ermittelten Besetzung oder der ermittelten Änderung der Besetzung in der elektrisch aktiven Störstelle eine Zufallszahl gebildet wird.

2. Zufallszahlengenerator nach Anspruch 1,
   bei dem die mindestens eine elektrisch aktive Störstelle in der Kristallstruktur des Halbleiterbauelements angeordnet ist.

3. Zufallszahlengenerator nach Anspruch 2,
   bei dem die mindestens eine elektrisch aktive Störstelle in einer Grenzfläche der Kristallstruktur des Halbleiterbauelements angeordnet ist.

4. Zufallszahlengenerator nach einem der Ansprüche 1 bis 3,
   bei dem das Halbleiterbauelement ein in MOS-Technologie hergestelltes Halbleiterbauelement ist.

5. Zufallszahlengenerator nach einem der Ansprüche 1 bis 4,
   bei dem das Halbleiterbauelement ein in CMOS-Technologie hergestelltes Halbleiterbauelement ist.

6. Zufallszahlengenerator nach einem der Ansprüche 1 bis 5,
   bei dem das Halbleiterbauelement ein Feldeffettransistor ist.

7. Zufallszahlengenerator nach Anspruch 6,
   bei dem der Feldeffettransistor derart dimensioniert ist, dass der Feldeffettransistor im statistischen Durchschnitt genau eine elektrisch aktive Störstelle aufweist.

8. Zufallszahlengenerator.nach einem der Ansprüche 1 bis 7,
   bei der die Zufallszahlen-Umsetzungseinheit derart eingerichtet ist, dass jeweils in einem Abstand einer vorgegebenen Zeitdauer die Besetzung oder die Änderung der Besetzung in der elektrisch aktiven Störstelle ermittelt werden kann.

9. Zufallszahlengenerator nach einem der Ansprüche 1 bis 8,
   bei der die Zufallszahlen-Umsetzungseinheit derart eingerichtet ist, dass der Übergang von einem ersten Besetzungszustand der elektrisch aktiven Störstelle in einen zweiten Besetzungszustand der elektrisch aktiven Störstelle oder der Übergang von dem zweiten Besetzungszustand der elektrisch aktiven Störstelle in den ersten Besetzungszustand der elektrisch aktiven Störstelle ermittelt werden kann.

10. Zufallszahlengenerator nach Anspruch 8,
    bei der die Zufallszahlen-Umsetzungseinheit derart eingerichtet ist, dass die vorgegebene Zeitdauer um ein Mehrfaches länger ist als eine durchschnittliche Zeit einer Änderung der Besetzung in der elektrisch aktiven Störstelle.

11. Zufallszahlengenerator nach einem der Ansprüche 1 bis 10,

    • mit einer Mehrzahl von Halbleiterbauelementen mit jeweils im statistischen Durchschnitt mindestens einer elektrisch aktiven Störstelle in der Struktur des jeweiligen Halbleiterbauelements,
    • wobei die Besetzungs-Erfassungseinheit mit allen Halbleiterbauelementen gekoppelt ist, und
    • mit einer Halbleiterbauelement-Auswahleinheit zum Auswählen eines Halbleiterbauelements, bei dem die Besetzung oder die Änderung der Besetzung in der elektrisch aktiven Störstelle ermittelt wird.

12. Zufallszahlengenerator nach einem der Ansprüche 6 bis 11, mit einer Gate-Spannungs-Justiereinrichtung, mittels der die an dem Feldeffekttransistor anliegende Gate-Spannung eingestellt werden kann.

**13.** Zufallszahlengenerator nach den Ansprüchen 6 und 11,

• mit einer Spannungsquelle, die mit der Halbleiterbauelement-Auswahleinheit derart gekoppelt ist, dass die Halbleiterbauelement-Auswahleinheit die von der Spannungsquelle bereitgestellte Spannung an den Gate-Anschluss des ausgewählten Feldeffekttransistors der Mehrzahl der Feldeffekttransistoren anlegt, und
• bei dem die Drain-Anschlüsse aller Feldeffekttransistoren mit der Besetzungs-Erfassungseinheit gekoppelt sind.

**14.** Zufallszahlengenerator nach Anspruch 13,
bei dem die Besetzungs-Erfassungseinheit einen Bandpass-Filter aufweist,

• dessen erster Eingang mit den Drain-Anschlüssen der Feldeffekttransistoren gekoppelt ist und
• dessen zweiter Eingang mit den Source-Anschlüssen der Feldeffekttransistoren gekoppelt ist.

**15.** Zufallszahlengenerator nach Anspruch 14,
bei dem die Besetzungs-Erfassungseinheit einen Differenzverstärker aufweist, der zwischen das Bandpass-Filter und die Zufallszahlen-Umsetzungseinheit geschaltet ist.

**16.** Zufallszahlengenerator nach einem der Ansprüche 1 bis 15,
bei dem die Zufallszahlen-Umsetzungseinheit als Komparator ausgestaltet ist.

**17.** Verfahren zum Erzeugen einer Zufallszahl,

• bei dem bei einem Halbleiterbauelement, welches mindestens eine elektrisch aktive Störstelle in seiner Struktur aufweist, eine Besetzung oder eine Änderung der Besetzung in der elektrisch aktiven Störstelle ermittelt wird, und
• bei dem aus der ermittelten Besetzung oder der ermittelten Änderung der Besetzung in der elektrisch aktiven Störstelle eine Zufallszahl gebildet wird.

**Claims**

**1.** Random number generator

• having a semiconductor component having at least one electrically active defect in the structure of the semiconductor component,
• having an occupation detection unit which is coupled to the semiconductor component and which is set up in such a way that an occupation or a change of the occupation in the electrically active defect can be determined, and
• having a random number conversion unit which is coupled to the occupation detection unit and which is set up in such a way that a random number is formed from the determined occupation or the determined change of the occupation in the electrically active defect.

**2.** Random number generator according to Claim 1,
in which the at least one electrically active defect is arranged in the crystal structure of the semiconductor component.

**3.** Random number generator according to Claim 2,
in which the at least one electrically active defect is arranged in an interface of the crystal structure of the semiconductor component.

**4.** Random number generator according to one of Claims 1 to 3,
in which the semiconductor component is a semiconductor component fabricated using MOS technology.

**5.** Random number generator according to one of Claims 1 to 4,
in which the semiconductor component is a semiconductor component fabricated using CMOS technology.

**6.** Random number generator according to one of Claims 1 to 5,

in which the semiconductor component is a field-effect transistor.

7. Random number generator according to Claim 6,
in which the field-effect transistor is dimensioned in such a way that the field-effect transistor has, on statistical average, exactly one electrically active defect.

8. Random number generator according to one of Claims 1 to 7,
in which the random number conversion unit is set up in such a way that the occupation or the change of the occupation in the electrically active defect can be determined in each case at an interval of a predetermined time duration.

9. Random number generator according to one of Claims 1 to 8,
in which the random number conversion unit is set up in such a way that it is possible to determine the transition from a first occupation state of the electrically active defect into a second occupation state of the electrically active defect or the transition from the second occupation state of the electrically active defect into the first occupation state of the electrically active defect.

10. Random number generator according to Claim 8,
in which the random number conversion unit is set up in such a way that the predetermined time duration is longer by a multiple than an average time of a change of the occupation in the electrically active defect.

11. Random number generator according to one of Claims 1 to 10,

   • having a plurality of semiconductor components having in each case on statistical average at least one electrically active defect in the structure of the respective semiconductor component,
   • the occupation detection unit being coupled to all the semiconductor components, and
   • having a semiconductor component selection unit for selecting a semiconductor component in which the occupation or the change of the occupation in the electrically active defect is determined.

12. Random number generator according to one of Claims 6 to 11,
having a gate voltage adjustment device which can be used to set the gate voltage present at the field-effect transistor.

13. Random number generator according to Claims 6 and 11,

   • having a voltage source which is coupled to the semiconductor component selection unit in such a way that the semiconductor component selection unit applies the voltage provided by the voltage source to the gate terminal of the selected field-effect transistor of the plurality of field-effect transistors, and
   • in which the drain terminals of all the field-effect transistors are coupled to the occupation detection unit.

14. Random number generator according to Claim 13,
in which the occupation detection unit has a bandpass filter,

   • whose first input is coupled to the drain terminals of the field-effect transistors and,
   • whose second input is coupled to the source terminals of the field-effect transistors.

15. Random number generator according to Claim 14,
in which the occupation detection unit has a differential amplifier connected between the bandpass filter and the random number conversion unit.

16. Random number generator according to one of Claims 1 to 15,
in which the random number conversion unit is configured as a comparator.

17. Method for generating a random number,

   • in which, in a semiconductor component having at least one electrically active defect in its structure, an occupation or a change of the occupation in the electrically active defect is determined, and
   • in which a random number is formed from the determined occupation or the determined change of the occupation in the electrically active defect.

**Revendications**

1. Générateur de nombres aléatoires

   • ayant un composant à semi-conducteurs ayant au moins un endroit d'impureté actif du point de vue électrique dans la structure du composant à semi-conducteurs ;
   • ayant une unité de détection d'occupation, qui est reliée au composant à semi-conducteurs et qui est telle qu'elle peut déterminer une occupation ou une modification de l'occupation de l'endroit d'impureté actif du point de vue électrique ; et
   • ayant une unité de conversion de nombres aléatoires, qui est reliée à l'unité de détection d'occupation et qui est telle qu'un nombre aléatoire est formé à partir de l'occupation qui a été déterminée ou de la variation de l'occupation qui a été déterminée dans l'endroit d'impureté actif du point de vue électrique.

2. Générateur de nombres aléatoires suivant la revendication 1,
   dans lequel le au moins un endroit d'impureté actif du point de vue électrique est disposé dans la structure cristalline du composant à semi-conducteurs.

3. Générateur de nombres aléatoires suivant la revendication 2,
   dans lequel le au moins un endroit d'impureté actif du point de vue électrique est disposé dans une surface limite de la structure cristalline du composant à semi-conducteurs.

4. Générateur de nombres aléatoires suivant l'une des revendications 1 à 3,
   dans lequel le composant à semi-conducteurs est un composant à semi-conducteurs fabriqué dans la technologie MOS.

5. Générateur de nombres aléatoires suivant l'une des revendications 1 à 4,
   dans lequel le composant à semi-conducteurs est un composant à semi-conducteurs fabriqué dans la technologie CMOS.

6. Générateur de nombres aléatoires suivant l'une des revendications 1 à 5,
   dans lequel le composant à semi-conducteurs est un transistor à effet de champ.

7. Générateur de nombres aléatoires suivant la revendication 6,
   dans lequel le transistor à effet de champ à des dimensions telles que le transistor à effet de champ a, en moyenne statistique, exactement un endroit d'impureté actif du point de vue électrique.

8. Générateur de nombres aléatoires suivant l'une des revendications 1 à 7,
   dans lequel l'unité de conversion de nombres aléatoires est telle que l'occupation ou la variation de l'occupation de l'endroit d'impureté actif du point de vue électrique peut être déterminée, respectivement, dans un intervalle d'un laps de temps prescrit.

9. Générateur de nombres aléatoires suivant l'une des revendications 1 à 8,
   dans lequel l'unité de conversion de nombres aléatoires est telle que le passage d'un premier état d'occupation de l'endroit d'impureté actif du point de vue électrique à un deuxième état d'occupation de l'endroit d'impureté actif du point de vue électrique ou que le passage du deuxième état d'occupation de l'endroit d'impureté actif du point de vue électrique au premier état d'occupation de l'endroit d'impureté actif du point de vue électrique peut être déterminé.

10. Générateur de nombres aléatoires suivant la revendication 8,
    dans lequel l'unité de conversion de nombres aléatoires est telle que le laps de temps prescrit est plus grand de plusieurs fois qu'une durée moyenne d'une modification de l'occupation de l'endroit d'impureté actif du point de vue électrique.

11. Générateur de nombres aléatoires suivant l'une des revendications 1 à 10,

    • ayant une multiplicité de composants à semi-conducteurs ayant, respectivement, en moyenne statistique, au moins un endroit d'impureté actif du point de vue électrique dans la structure du composant à semi-conducteurs respectif ;
    • dans lequel l'unité de détection d'occupation est couplée à tous les composants à semi-conducteurs ; et

• ayant une unité de sélection de composants à semi-conducteurs pour sélectionner un composant à semi-conducteurs, dans lequel l'occupation ou la variation de l'occupation de l'endroit d'impureté actif du point de vue électrique est déterminée.

**12.** Générateur de nombres aléatoires suivant l'une des revendications 6 à 11,
comprenant un dispositif de réglage de la tension de grille au moyen duquel la tension de grille s'appliquant au transistor à effet de champ peut être réglée.

**13.** Générateur de nombres aléatoires suivant les revendications 6 et 11,

• ayant une source de tension qui est couplée à l'unité de sélection de composants à semi-conducteurs de façon à ce que l'unité de sélection de composants à semi-conducteurs applique la tension procurée par la source de tension à la borne de grille du transistor à effet de champ sélectionné parmi la pluralité des transistors à effet de champ ; et
• dans lequel les bornes de drain de tous les transistors à effet de champ sont reliées à l'unité de détection d'occupation.

**14.** Générateur de nombres aléatoires suivant la revendication 13,
dans lequel l'unité de détection d'occupation comporte un filtre passe-bande,

• dont la première entrée est reliée aux bornes de drain des transistors à effet de champ ; et
• dont la deuxième entrée est reliée aux bornes de source des transistors à effet de champ.

**15.** Générateur de nombres aléatoires suivant la revendication 14,
dans lequel l'unité de détection d'occupation comporte un amplificateur différentiel qui est monté entre le filtre passe-bande et l'unité de conversion de nombres aléatoires.

**16.** Générateur de nombres aléatoires suivant l'une des revendications 1 à 15,
dans lequel l'unité de conversion de nombres aléatoires est sous la forme d'un comparateur.

**17.** Procédé de production d'un nombre aléatoire,

• dans lequel on détermine pour un composant à semi-conducteurs qui a au moins dans sa structure un endroit d'impureté actif du point de vue électrique une occupation ou une modification de l'occupation de l'endroit d'impureté actif du point de vue électrique ; et
• dans lequel on forme un nombre aléatoire à partir de l'occupation qui a été déterminée ou de la variation d'occupation qui a été déterminée de l'endroit d'impureté actif du point de vue électrique.

# FIG 1

EP 1 379 940 B1

FIG 2B

f-0

f-1

202

f-2

lg (u2)

1/2πτ

lg(f)

FIG 2A

201

u

t

## FIG 3

## FIG 4

FIG 5

EP 1 379 940 B1

FIG 6